# EUROPEAN PATENT SPECIFICATION

(11) **EP 0 478 271 B1**
(45) Date of publication and mention of the grant of the patent: **21.06.1995**
(21) Application number: 91308671.6
(22) Date of filing: 24.09.1991
(51) Int. Cl.: B29D 30/70, B29D 30/26

(54) **Method of manufacture and building drum for a tyre breaker or belt**
Verfahren und Aufbautrommel zur Herstellung eines Luftreifengürtels
Méthode et tambour pour fabriquer une ceinture de pneumatique

(30) Priority: 28.09.1990 DE 4030747
(43) Date of publication of application: 01.04.1992
(73) Proprietor: SP REIFENWERKE GMBH, 63450 Hanau (DE)
(72) Inventor: Winter, Hans-Joachim, W-6460 Gelnhausen 2 (DE)
(74) Representative: Stewart, Charles Geoffrey

(56) References cited:
- EP-A- 0 294 484
- EP-A- 0 353 659
- EP-A- 0 400 859
- GB-A- 2 135 237
- US-A- 4 928 742

## Description

The invention relates to a breaker belt assembling drum for the manufacture of a breaker for a vehicle tyre comprising an essentially cylindrical steel ply assembly which is covered by a textile band arrangement.

Prior art methods comprise the winding of a textile band, notably a nylon band, over the steel plies, preferably in the form of a strip which is wound helically around the steel plies. In this known method the textile band arrangement is wound over the steel belting which has been assembled on a flat drum to give a planar cross section
EP-A-353,659 discloses a breaker belt assembling drum according to the preamble of claim 1.

It is an object of the present invention to improve such breakers such that they can safely resist higher loads.

The steel-textile breaker assembly according to claim 1 undergoes a higher extension in the circumferential direction in the region of the tyre shoulders when it is expanded in the completed green tyre into the heated mould with the result that the breaker has improved properties giving improved high speed tyre performance and better long-term structural performance.

Further, in a vehicle tyre made in accordance with claim 1, the breaker has a regular or more uniform extension over the cross section of the tyre, i.e. from one tyre shoulder across the top or centre of the tyre to the other tyre shoulder.

By using the invention it is possible to save material from the textile band, in particular the use of lower filament or cord size and/or lower filament or cord density, without affecting the performance at high speed of the finished tyre.

The invention provides a breaker belt assembling drum for manufacturing the breaker according to claim 1.

Because the first drum segments are flat in the axial direction and the second drum segments are bulged or curved in the axial direction the different radial movements of the first and the second drum segments provide a belt assembling drum which allows, in a first position in which the first flat drum segments provide the outer periphery of the drum, to apply the steel belt plies, and which allows, in a second position located radially farther outwardly in which the second bulged drum segments determine the outer periphery of the drum, to wind the textile band onto the steel belting which is deformed into a curved shape.

Preferably the bulged drum segments are arranged around the circumference of the drum alternately with the flat drum segments.

The centres of curvature of the bulge of the second drum segments may be arranged essentially on a centre circumferential line with respect to the axial width of the drum to provide a symmetrical curved deformation of the steel belting, in which the bulge or curvature of the bulged drum segment occurs not only in the axial direction but in addition to the circumferential direction and the drum segments which are horizontal in the axial direction are also curved in the circumferential direction. By this arrangement a rounder belt structure is achieved, i.e. a structure of smoother curvature.

Furthermore the centres of curvature of the bulge of each individual bulged drum segment can be disposed on a straight line, whereby the finishing of the bulged drum segments is simplified. If the drum segments manufactured in this manner are made short in the circumferential direction and short drum segments are accordingly distributed close to each other over the circumference, a more homogeneous, essentially circular-shaped circumferential form for the steel belting is also obtained.

The invention will now be explained in more details in connection with an example and with reference to the drawings, in which:
Figure 1 is a cross section through a belt structure achieved with the method of the invention;
Figure 2 is a schematic side view of a belt assembling drum of the invention;
Figure 3 is a sectional view of a flat drum segment;
Figure 4 is a sectional view of a bulged drum segment; and
Figure 5 is a detail of Figure 2 showing the bulged drum segments outwardly displaced.

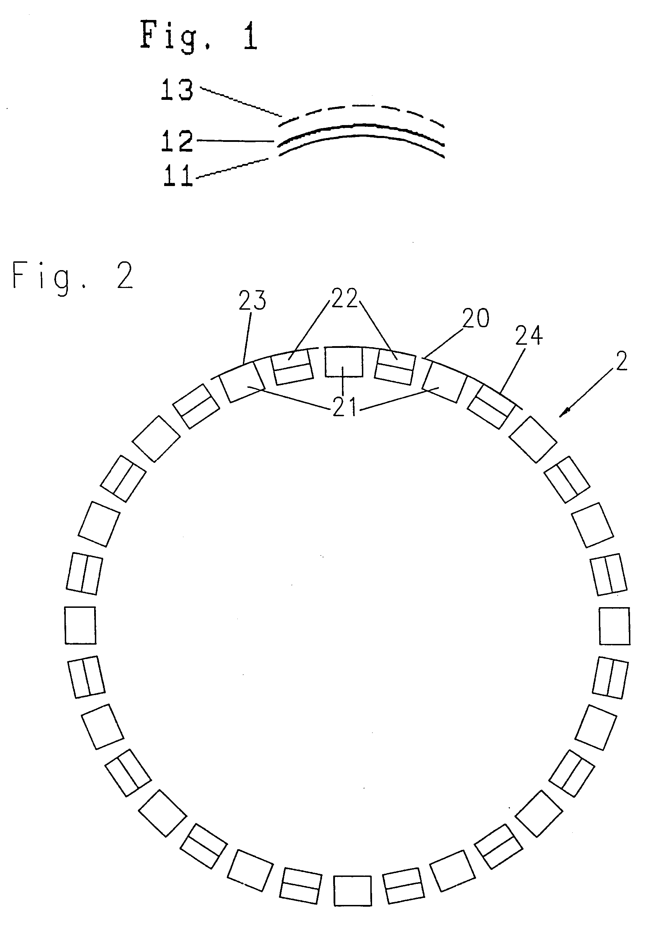

A belt structure of a steel belted radial tyre for a passenger car is illustrated in Figure 1 and comprises two steel belt plies or layers 11,12 whose steel cords cross each other. The belt layers 11,12 are covered by a textile band 13 which is wound in a helix on the steel ply 12. This is a nylon band having for example a width of 10mm wound with the side edges of the textile band either terminated at an obtuse angle at the side edges of the steel belt structure or overlapping outwardly in the axial direction. The belt structure comprising the two steel layers 11,12 and the textile band 13 is in this case slightly bulged or curved in cross section.

Figure 2 shows schematically the circular-shaped arrangement of drum segments 21,22 of a belt assembling drum 2. First flat drum segments 21 and second curved or bulged drum segments 22 are arranged alternately around the drum. The flat drum segments 21 have at their outer circumference in the axial direction a substantially flat surface 23. They may be slightly curved in the circumferential direction in correspondence with the envelope circle of the belt assembling drum 2.

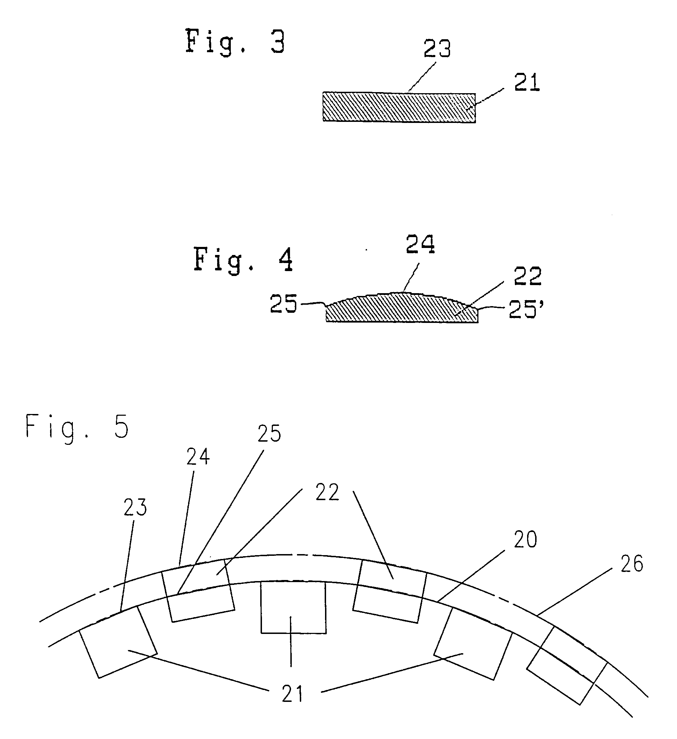

Figure 3 shows a section through a flat drum segment 21 in a plane extending through the axis of the belt assembling drum 2. The upper sectional edge of the outer plane 23 extends parallel to the axis of the belt assembling drum.

The curved drum segments 22 have axially outer edges 25,25′ between which the radially outer surface bulges outwardly radially from the centre of the drum segment 22 and forms a central region 24.

In Figure 5 is shown a detail of the belt assembling drum schematically illustrated in Figure 2, in which the bulged drum segments 22 are displaced in a radially outwardly offset position with respect to the flat drum segment 21. In the position illustrated in Figure 2, all drum segments 21,22 lie in a common circumferential line, such that the maximum circumference 20 envelops both the flat drum segments 21 and the bulged drum segments 22.

The steel belt plies or layers are applied in turn by wrapping onto the belt assembling drum in this first position of the drum segment. The steel belting 11,12 then lie flat on the flat drum segments 21. The steel belting can also contact the central regions 24 of the bulged drum segment 22 which are arranged therebetween or the drum segment 22 can be positioned radially inwardly at such a distance that in this position there is no contact of the steel belting with the bulged drum segments 22.

After the steel belting 11, 12 has been assembled onto the belt assembling drum 2, the bulged drum segments 22 are displaced outwardly until their radially outer surfaces extend at least partly radially beyond the circumferential line 20, whereby the regions 24 of the bulged drum segments 22 provide the envelope of the circumferential line 26 having a larger diameter in the centre and in the axial cross section a bulge or convexity.

In Figure 5 the bulged drum segments 22 are displaced outwardly over such a distance that their axial outer edges 25 are displaced radially outwardly exactly as far as the outer surfaces 23 of the flat drum segments 21.

The outward displacement of the bulged drum segments 22 radially outwardly beyond the circumferential line 20 which carries the steel plies 11,22 deforms the steel plies into a convex or crown shape. The textile band can then be helically wound on the curved steel plies 11 and 12.

The resultant breaker assembly has a predetermined curvature as shown in Figure 1. The tyre building can then be completed by expanding or shaping a tyre carcass into the breaker sub-assembly in the conventional way, applying a tyre tread strip and if necessary separate sidewalls and consolidating the assembly. The resulting green tyre contains a curved or convex cross section breaker package in which, most importantly, the bandage strip winding length for each turn is set to match the curvature.

The green tyre is then passed to a vulcanisation/moulding machine where the tyre is expanded into a patterned mould and subjected to heat and pressure to cure it. In the mould the breaker and strip wound bandage are expanded and the tensions applied to the components provide the results required in the finished tyre.

## Claims

1. A breaker belt assembling drum for the manufacture of a breaker for a radial tyre comprising steel reinforcement plies covered by a textile bandage or cord comprising helically winding a textile strip of bandage over steel belt plies, wherein the steel reinforcement plies are bulged radially outwards in the axially central or crown regions before winding on of the textile strip, the assembling drum comprising a plurality of drum segments arranged to form a circular ring characterised by first drum segments (21) which are flat in the axial direction of the drum (2) and second drum segments (22) which are curved or bulged in the axial direction of the drum (2), flat drum segments (21) being movable from a rest position to a first outward radial position in which the radially outer surfaces (23) of the flat drum segments (21) are located on the same circumference (20) as the radially outmost central regions (24) of the bulged drum segments (22) and the bulged drum segments (22) are movable to a second position located radially outwards of the circumference (20).

2. A drum according to Claim 1, characterised in that the bulged drum segments (22) are arranged over the circumference of the drum (2) in alternance with the flat drum segments (21).

3. A drum according to Claim 1 or 2, characterised in that the centres of curvature of the bulge of the bulged drum segments (22) are disposed essentially on a central circumferential line with respect to the axial width of the drum (2).

4. A drum according to any one of Claims 1 to 3 characterised in that the centres of curvature of the bulge of an individual bulged drum segment (2) are disposed on a straight line.

5. A drum according to any one of Claims 1 to 4 characterised in that the bulged drum segments (22) are displaced to the second position over such a distance that the axial outer edges (52) are disposed on the same circumference as the radial outer surfaces (23) of the flat drum segments (21).

## Patentansprüche

1. Eine Breakergürtel-Zusammenbautrommel zur Herstellung eines Breakers für einen Radialreifen mit von einem Textilband oder Kord bedeckten Stahlverstärkungslagen, wobei ein Textilstreifen des Bandes über die Stahlgürtellagen schraubenförmig gewickelt ist, worin die Stahlverstärkungslagen radial nach außen in den axial zentralen oder Kronenbereichen vor dem Aufwickeln des Textilstreifens gewölbt sind und die Zusammenbautrommel eine Vielzahl von Trommelsegmenten umfaßt, die so angeordnet sind, daß sie einen kreisförmigen Ring bilden,
**gekennzeichnet** durch
erste Trommelsegmente (21), die in der axialen Richtung der Trommel (2) eben sind, und zweite Trommelsegmente (22), die in der axialen Richtung der Trommel (2) gekrümmt oder gewölbt sind, wobei die ebenen Trommelsegmente (21) von einer Ruheposition in eine erste äußere radiale Position bewegbar sind, in der sich die radial äußeren Oberflächen (23) der ebenen Trommelsegmente (21) auf dem gleichen Umfang (20) wie die radial am weitesten außen gelegenen zentralen Bereiche (24) der gewölbten Trommelsegmente (22) befinden, und die gewölbten Trommelsegmente (22) in eine zweite Position bewegbar sind, die radial außerhalb des Umfangs (20) liegt.

2. Eine Trommel nach Anspruch 1,
dadurch **gekennzeichnet,**
daß die gewölbten Trommelsegmente (22) über den Umfang der Trommel (2) abwechselnd zu den ebenen Trommelsegmenten (21) angeordnet sind.

3. Eine Trommel nach Anspruch 1 oder 2,
dadurch **gekennzeichnet,**
daß die Wölbungskrümmungszentren der gewölbten Trommelsegmente (22) im wesentlichen auf einer zentralen Umfangslinie bezüglich der axialen Breite der Trommel (2) angeordnet sind.

4. Eine Trommel nach einem der Ansprüche 1 bis 3,
dadurch **gekennzeichnet,**
daß die Wölbungskrümmungszentren eines individuellen gewölbten Trommelsegments (2) auf einer geraden Linie angeordnet sind.

5. Eine Trommel nach einem der Ansprüche 1 bis 4,
dadurch **gekennzeichnet,**
daß die gewölbten Trommelsegmente (22) so weit in die zweite Position verschoben sind, daß die axialen äußeren Kanten (52) auf dem gleichen Umfang wie die radialen äußeren Oberflächen (23) der ebenen Trommelsegmente (21) angeordnet sind.

## Revendications

1. Tambour de confection d'une ceinture de nappe-sommet destinée à la fabrication d'une nappe-sommet pour pneumatique à carcasse radiale, comprenant des nappes d'acier d'armature recouvertes par des câblés ou une bande textile formés par enroulement d'une bande textile sur les nappes de ceinture d'acier, les nappes d'armature d'acier étant bombées radialement vers l'extérieur dans les régions axialement centrales ou bombées avant enroulement de la bande textile, le tambour de confection comprenant plusieurs segments destinés à former un anneau circulaire, caractérisé par des premiers segments (21) de tambour qui sont plats dans la direction axiale du tambour (2) et des seconds segments de tambour (22) qui sont courbes ou bombés dans la direction axiale du tambour (2), les segments plats (21) étant mobiles d'une position de repos à une première position radiale vers l'extérieur dans laquelle les surfaces radialement externes (23) des segments plats (21) de tambour se trouvent sur la même circonférence (20) que les régions centrales les plus externes radialement (24) des segments bombés (22) du tambour, et en ce que les segments bombés (22) du tambour sont mobiles vers une seconde position placée radialement vers l'extérieur de la circonférence (20).

2. Tambour selon la revendication 1, caractérisé en ce que les segments bombés (22) de tambour sont placés à la circonférence du tambour (2) en alternance avec les segments plats (21).

3. Tambour selon la revendication 1 ou 2, caractérisé en ce que les centres de courbure de la partie bombée des segments bombés (22) sont placés essentiellement sur un axe circonférentiel central par rapport à la largeur axiale du tambour (2).

4. Tambour selon l'une quelconque des revendications 1 à 3, caractérisé en ce que les centres de courbure des parties bombées des segments individuels bombés (2) sont disposés sur une droite.

5. Tambour selon l'une quelconque des revendications 1 à 4, caractérisé en ce que les segments bombés (22) sont décalés vers la seconde position sur une distance telle que les bords axialement externes (52) se trouvent sur la même circonférence que les surfaces radiales externes (23) des segments plats (21) du tambour.
